# EUROPEAN PATENT APPLICATION

(11) **EP 0 848 270 A1**
(43) Date of publication of application: **17.06.1998**
(21) Application number: 97309929.4
(22) Date of filing: 09.12.1997
(51) Int. Cl.: G02B 6/42

(54) **Optical transmitter and receiver device**

(30) Priority: 10.12.1996 JP 329779/96
(71) Applicant: MITSUBISHI GAS CHEMICAL COMPANY, INC., Chiyoda-ku, Tokyo (JP)
(72) Inventor: Ohwada, Hisashi, Mitsubishi Gas Chem. Company Inc., Tokyo (JP); Ohba, Michio, Mitsubishi Gas Chem. Company Inc., Tokyo (JP); Takano, Toshihiko, Mitsubishi Gas Chem. Comp. Inc., Tokyo (JP)
(74) Representative: Nicholls, Michael John

(57) **Abstract**

A highly reliable and easily produced optical transmitter and receiver device, fabricated by joining and fixing an optical input/output part to a combined waveguide port of an optical waveguide (11) designed for 1 : N branching (N = an integer of at least 2) and providing each of branched waveguide ports of the optical waveguide (11) with a light emitting device part (14,15,16) or a light receiving device (13) part,
wherein the optical waveguide (11) is fixed in a box (1), that wall of the box which is located on the branched waveguide end side is provided with holes to interfit the light emitting device part or the light receiving device (13) part, and the light emitting device part (14,15,16) or the light receiving device (13) part is fixed in the hole and spaced from the branched waveguide ports.

## Description

The present invention relates to an optical transmitter and receiver device for O/E electric signal conversion used for the transmission of the optical signal between apparatuses in optical communication, optical LAN or optical measurement control. More specifically, it relates to an optical transmitter and receiver device which permits optical two-way transmission or optical wavelength multiplex transmission with a single optical fiber by coupling a branched optical waveguide and a light-receiving and emitting device.

As a device for transmitting or receiving optical signal between electronic apparatuses (optical transmitter and receiver devices), there have been developed a variety of optical transmitter and receiver devices which are structured by combining optical parts such as a mirror and a lens, a light-emitting device and a light-receiving device and connecting an optical fiber thereto for inputting and outputting a signal.

Since, however, the above conventional optical transmitter and receiver devices are required to be fabricated by spatially arranging many optical parts and adjusting optical axes thereof, they have a problem in mass-productivity. Further, since many optical parts are separately disposed, the above conventional optical transmitter and receiver devices have a problem in resistance to vibration, impact and environmental changes such as a change in temperature. Further, since many optical parts are spatially arranged, it is difficult to downsize the optical transmitter and receiver devices.

As an optical transmitter and receiver device which overcomes the above problems and has a decreased size and high reliability, there has been proposed a device obtained by connecting an optical fiber, a light emitting device and a light receiving device for inputting and outputting optical signal to a substrate to which an optical waveguide formed of a polymer film (polymer optical waveguide) are fixed, fixing these to form an integral whole, sealing the periphery of the integral whole with a resin and connecting an optical fiber connector to the other end of the optical fiber (JP-A-06-34833). Further, as an optical waveguide device with an optical receptacle, there has been proposed a device obtained by connecting an optical receptacle having a ferrule with a bare optical fiber attached inside each to all of end portions of an optical waveguide of a substrate to which the polymer optical waveguide is fixed, fixing the optical receptacle in a metal case (box), and filling and curing a resin in the case (JP-A-06-75141). Fig. 5 of JP-A-06-75141 shows an example where the optical receptacle is directly fixed to a polymer optical waveguide part described in JP-A-06-34833.

The present inventors prepared optical transmitter and receiver devices similar to that shown in Fig. 5 of JP-A-06-75141, fabricated optical transmitter and receiver modules by connecting the above optical transmitter and receiver devices to electronic circuit boards designed for controlling the light emitting and light receiving devices thereof and integrating these, and tested them. As a result, it has been found that these devices caused no problem when tested as an optical transmitter and receiver device, but that some of them discontinued functioning in a heat cycle test when they were integrated with the electronic circuits.

It has been also found that the above problem is mainly caused by the method of connecting the optical transmitter and receiver device to an electronic circuit board. The present inventors have therefore devised an optical transmitter and receiver device which is free from the influence caused by the connection method, and further, the present inventors have made diligent studies with regard to the structure of an optical transmitter and receiver device which can be easily fabricated even if it is an optical transmitter and receiver device formed by connecting many light receiving devices or light emitting devices through an optical waveguide having a large number of branches. As a result, the present invention has been arrived at.

It is an object of the present invention to provide an optical transmitter and receiver device which is highly reliable and can be easily fabricated.

It is another object of the present invention to provide an optical transmitter and receiver device which is highly reliable and can be easily fabricated even if a waveguide has a large number of branches.

According to the present invention, there is provided an optical transmitter and receiver device fabricated by joining and fixing an optical input/output part to a combined waveguide port of an optical waveguide designed for 1 : N branching (N = an integer of at least 2) and providing each of branched waveguide ports of the optical waveguide with a light emitting device part or a light receiving device part,
wherein the optical waveguide is fixed in a box, that wall of the box which is located on the branched waveguide end side is provided with holes to fit the light emitting device part or the light receiving device part, and the light emitting device part or the light receiving device part is fixed in the hole and spaced from the branched waveguide ports.

The invention will be further described by way of example with reference to the accompanying drawings, in which:-

Fig. 1 is a plan view of one example of the optical transmitter and receiver device of the present invention.

Fig. 2 is a front view of one example of the optical transmitter and receiver device of the present invention.

Fig. 3 is a perspective view of the constitution of parts used in Example.

Fig. 4 is a plan view of one example of the optical transmitter and receiver device of the present invention.

Fig. 5 is a plan view of one example of the optical transmitter and receiver device of the present invention.

In the present invention, the optical waveguide is preferably a polymer optical waveguide produced by a solvent casting method. In the optical transmitter and receiver device of the present invention, the optical input/output part to be joined and fixed to the combined wavuguide port of the optical waveguide is an optical receptacle, and preferably, the optical receptacle is fixed to the box. Otherwise, the optical input/output part may be an optical fiber whose end portion connected to the optical waveguide is reinforced with a reinforcement material, and the reinforcement material is fixed to the box.

The first feature of the present invention is that the optical waveguide and the optical transmitter and receiver device are connected through a space and are not directly connected to each other. This feature overcomes the conventional problem which sometimes occurs when an optical transmitter and receiver device is fixed directly to the end portion of an optical waveguide, i.e., that the end portion of the optical waveguide is damaged due to putting in and off a connector or a stress caused by a temperature change.

Further, the present invention has the following features. The light emitting device part is preferably a part fabricated by integrating a light emitting device and a collective lens present before the light emitting device (on the optical waveguide side) with a support. More preferably, the light emitting device part has a focal point in a predetermined position before the light emitting device part (on the optical waveguide side). The light receiving device part is preferably a light receiving device itself or a part obtained by integrating a light receiving device having a sensing area in a predetermined position with a support. The branched waveguide ports have optical axes which are parallel with each other, the holes are arranged on a straight line at intervals equivalent to those of the branched waveguide ports, and the holes are provided on a plane on which the branched waveguide ports exist. The axial alignment is attained by adjusting the position of the optical waveguide to be fixed. According to the present invention, therefore, the positions of the light focal point of the light emitting device and the sensing area of the light receiving device relative to the box can be set in desired positions by simply fixing the light transmitting and receiving device part in the hole of the box, and even if the number of the light transmitting and receiving device parts is large, the axial alignment is attained in the lump for the light emitting and receiving devices and the optical waveguide.

### (Light transmitter and receiver device using an optical waveguide designed for two branches, one light emitting device and one light receiving device)

For easier understanding, the present invention will be explained with reference to an optical transmitter and receiver device using an optical waveguide having two branches, one light emitting device and one light receiving device.

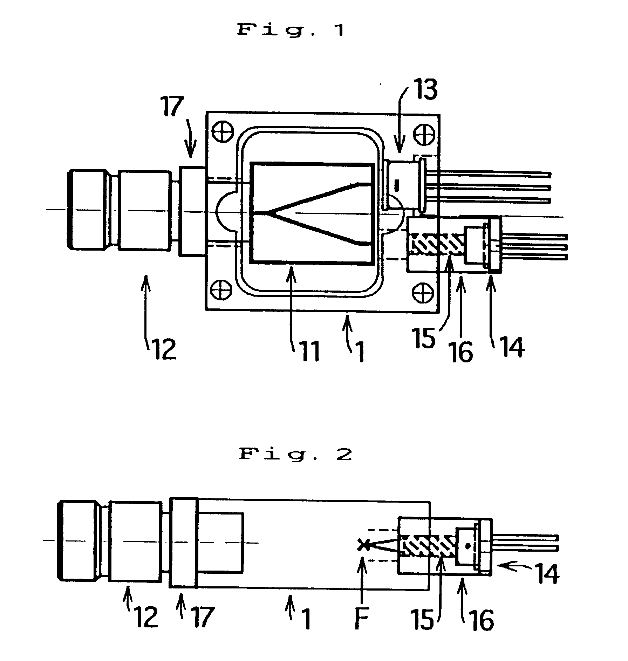

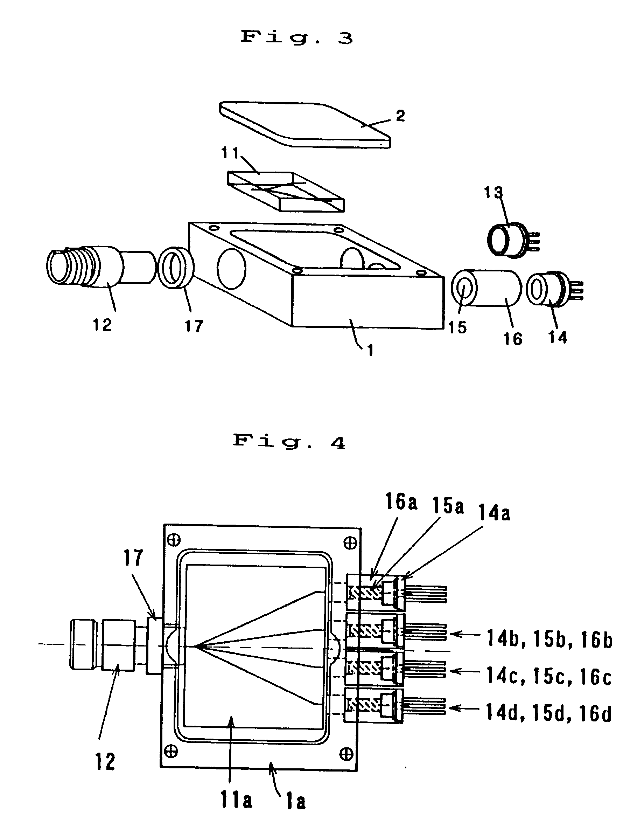

Fig. 1 is a plan view of one example of the optical transmitter and receiver device of the present invention. Fig. 2 is a front view of the optical transmitter and receiver device shown in Fig. 1. Fig. 3 is a perspective view of the constitution of parts.

In Figs. 1 and 2, an optical receptacle (12) having a polymer optical waveguide (11) fixed thereto is fixed to a left wall of a box 1, and in an opposite right wall of the box (1), a light receiving device (13) is fixed and spaced from one branched waveguide port on the other side of the optical waveguide (11), and a lens (15) and a light emitting device (14) integrated with a substrate 16 and spaced from another branched waveguide port.

The airtightness inside the box (1) is maintained by attaching a cover (2) with an adhesive as shown in Fig. 3.

The optical transmitter and receiver device of Fig. 1 is assembled as follows.

First, the light receiving device (13) and the light emitting device part (14, 15, 16) are fixed to predetermined positions of holes on the right wall of the box 1.

Then, the optical receptacle (12) is inserted through a hole of the left wall of the box (1), and on the other hand, the optical waveguide (11) is placed inside the box. These are held on an optical stage. Thereafter, light is introduced through the optical receptacle (12), and the optical axes of the optical waveguide (11) and the optical receptacle (12) are adjusted while using the light receiving device (13) as a monitor. And, the optical waveguide (11) and the optical receptacle (12) are fixed to each other with an adhesive.

Then, while light outputted from the optical receptacle (12) is introduced to a power meter, the light emitting device (14) is operated, and the optical axes of the light emitting device (14) and one of the branched waveguide ports are adjusted. The optical receptacle (12) is bonded and fixed to a proper position on the left wall of the box (1).

In this case, since the light receiving device has a large sensing area, sufficient sensitivity can be secured by visual horizontal positioning alone.

Finally, a cover is attached to the box (1) to tightly close the box, whereby the optical transmitter and receiver device is obtained.

Although not specially limited, the material for the box used in the present invention is selected from a metal, a resin, a filler-containing resin or a ceramic in view of the sufficient durability of the box against putting in and out an optical connector and a stress caused by a temperature change. Of these materials, a metal is particularly preferred since it readily absorbs heat generated from the light emitting device and reduces an increase in the temperature of the device. The metal includes aluminum, an aluminum alloy, copper, a copper alloy, iron and an iron alloy (stainless steel). For decreasing the production cost, a filler-containing resin may be used.

The optical receptacle (12) used in the present invention may be a usual optical receptacle. However, for preventing or avoiding the damage caused on the optical waveguide by putting in and out the optical connector and for permitting excellent connection only by fitting it to the optical connector, the optical receptacle (12) preferably has a constitution in which an optical-fiber-inserted ferrule is inserted between the optical waveguide and the optical connector and the end portion of this ferrule and the end portion of the ferrule on the optical connector side are contacted to each other.

In the above embodiment, a portion of the optical receptacle is fixed to the box, while a portion of the optical waveguide may be fixed to the box by providing a base in the box.

Further, the optical input/output part which is joined and fixed to the combined waveguide port of the optical waveguide may be a part obtained by reinforcing that portion of an optical fiber which is to be connected to the optical waveguide, with a reinforcement material such as a glass capillary or an optical fiber array substrate. In this case, a portion of the above reinforcement material is preferably fixed to the box, while a portion of the optical waveguide may be fixed to the box.

The optical waveguide (11) includes a polymer optical waveguide and a glass optical waveguide. Of these, a polymer optical waveguide is preferred.

The above polymer optical waveguide is produced by selectively photo-polymerizing a photo-polymerizable monomer in a polymer matrix, removing the photo-polymerizable monomer which has not been photopolymerized to form a polymer film having a refractive index distribution (JP-B-56-3522, JP-A-03-156407), and attaching glass substrates, or the like to both surfaces of the polymer film to support, fix and protect the polymer film. The distance between two branched waveguide ports of the optical waveguide of the present invention is determined depending upon the sizes of the light receiving device and the light emitting device.

The light receiving device and the light emitting device can be selected from commercially available industrially mass-produced products, such as CAN type products. A wavelength-selecting filter may be attached to the sensing area of the light receiving device as required. Further, the light emitting device is generally used in combination with a collective lens, and the collective lens is selected from a rod lens, a spherical lens and an aspherical lens.

In the optical transmitter and receiver device of the present invention, the distance between the branched waveguide port and the light receiving device is set at an allowable maximum distance depending upon the effective sensing area of the light receiving device and the numerical aperture of the branched waveguide, and therefore, the distance is set in a distance range smaller than the above as required. Further, the distance between the branched waveguide port and the light emitting device is properly determined depending upon the form of the light emitting device that is used. For example, when the light emitting device is used in combination with a collective lens, the distance is set such that the focal point is positioned in the branched waveguide port.

The above-specified optical transmitter and receiver device of the present invention is mounted on an electronic circuit designed for processing electric signal from the light receiving device of this optical transmitter and receiver device and processing electric signal to the light emitting device, and is suitably used as such.

The optical transmitter and receiver device is fixed in a case having an electric circuit inside such that the joint portion of the optical receptacle (12) to be connected to an outer optical connector is positioned outside. The light receiving device and the light emitting device are mounted by connecting their terminals to the electronic circuit board by soldering, etc.

When the optical transmitter and receiver device is subjected to a practical use test in a state where it is mounted, a stress caused by a temperature change and a stress caused by putting in and out a connector are exerted on the box (1) alone, since the optical waveguide is not directly connected to the light receiving device and the light emitting device. The box (1) is fabricated so as to have a strength sufficient for withstanding a load caused by the connection and disconnection of a connector. In this case, the box (1) can generally sufficiently withstand the stress caused by a temperature change since this stress is smaller than the above load. Further, the box (1) suffers no permanent deformation and does not cause optical connection failure.

Further, the exposed surfaces of the branched waveguide portions, the light receiving device and the light emitting device are not exposed to outer atmosphere since the box (1) is air-tightly sealed with a cover, and the optical transmitter and receiver device can ensure sufficient reliability.

Further, when the box (1) is made of a material having a relatively high heat conductivity and a high heat capacity such as stainless steel, and when the box (1) is improved in contact to heat-generating parts such as the light emitting device, the heat generated at the time of light emission is readily absorbed and the temperature increase in the light emitting device itself can be prevented.

As a result, the optical transmitter and receiver device can be used approximately up to the upper limit of a temperature range applicable to general laser diodes.

### (Light transmitter and receiver device using an optical waveguide designed for four branches and four light emitting devices)

With regard to an optical transmitter and receiver device in which the number N of optical waveguide branches and the number of light emitting and light receiving devices are large, a Light transmitter and receiver device using an optical waveguide designed for four branches and four light emitting devices will be explained below.

When the number of light emitting and light receiving devices, light emitting devices in particular, is large, it is difficult to fix the light emitting devices such that all the light emitting devices have optimum positional relationships to branched waveguide ports and are properly spaced from the branched waveguide ports. That is because the position of light emitting point differs from one light emitting device to another and because light from each light emitting device is focused in a very narrow beam through a collective lens. The relative relation of the position of the light emitting device itself and the position of the focal point of light focused through a lens differs among light emitting device parts even if the positional relationship between the lens and the light emitting device is simply made constant.

In one method, the light emitting devices may be fixed by positioning them in some allowable ranges, fixing the optical waveguide to the box first, and consecutively fixing the light emitting devices in optimum positions while allowing them to emit light one by one. However, this method is not efficient, since all the devices are required to be adjusted one after another.

For overcoming the above problem and achieving rational production procedures, the following method of the present invention can be employed.

That is, when the light emitting device and the collective lens are fixed to a support to form a light emitting device part, the fixing positions of the light emitting device and the collective lens are adjusted such that the focal point exists in a predetermined position before the light emitting device part (on the optical waveguide side), whereby the focal point can be always in a constant position relative to the position of the hole of the box wall, where the light emitting device part is fixed.

The above "predetermined position before the light emitting device part" refers to a three-dimensional position. For example, in a light emitting device part using a support (16) having a cylindrical form shown in Fig. 2, the position of the focal point F can be set at a position which is on a central axis of the cylindrical form and has a constant distance from the top end of the support.

The above light emitting device part can be specifically fabricated, for example, as follows. First, the support (sheath) in which the collective lens is incorporated and fixed is held on an optical stage, and further, an optical fiber end is held in a position, which is to be a focal point, so as to face the collective lens. Then, in a state where the other end of the optical fiber is introduced to an optical power meter, the position of the light emitting device in the support is adjusted while allowing the light emitting device to emit light, and the light emitting device is fixed to the support in a position where the maximum optical power is attained. These procedures are easy and the light emitting device part can be fabricated for a short period of time.

When the light emitting device part having a focal point at a predetermined position as above is used, the positional accuracy of the holes of the wall to fit the light emitting device part is sufficiently high, and when the shaping accuracy of the support for the light emitting device part is sufficiently high, the position of the light focal point of each light emitting device part relative to the box can be well precisely determined as required by simply fitting each light emitting device part in each holes and fixing them with an adhesive. When the above relative positions are determined so as to meet with the branched waveguide ports, axial alignment can be carried out in the lump.

For example, when the optical waveguide has optical axes which are in parallel with one another on the branched waveguide port side, the optical transmitter and receiver device may have arrangements in which the holes are arranged on a straight line at intervals equivalent to those of the branched waveguide ports, the holes are provided on a plane on which the branched waveguide ports exist, and each focal point exists in a constant distance from the box wall.

In the fabrication step, there may be employed procedures of first fixing the light emitting device part in the holes of the box walls and then carrying out axial alignment by adjusting the fixing position of the optical waveguide.

The above description can be applied to a case where part or all of the light emitting device parts are replaced with light receiving device parts. In the light receiving device part, the sensing area and the branched waveguide port are required to have a proper positional relationship to each other as well. Since, however, the sensing area is relatively large and since the distance between the sensing area and the branched waveguide port has a relatively large allowable range, the light receiving device does not require such accurate positioning as the light emitting device requires.

As a light receiving device part, light receiving devices may be used as they are, or a part prepared by integrating a light receiving device and a support may be used like the above light emitting device(s). When a support is used, the light receiving devices are fixed to the support so as to exist in predetermined positions. Generally, the axial alignment can be carried out by simply making holes to fit the light receiving devices and fixing the devices in the holes. The light receiving device part may be provided with a wavelength selecting filter on its sensing area as required.

A hole to fit the light receiving device part may be made in the wall of the box, so that the light receiving device part is fixed in the hole. In this case, the axial alignment can be carried out later in the lump.

Further, holes having a uniform shape may be made for fixing the light emitting device part and the light receiving device part by uniformly shaping the outer form of the light emitting device part and the outer form of the light receiving device part. In this case, boxes of one kind can be used for optical transmitter and receiver devices having a variety of device constitutions, and the production cost can be accordingly decreased.

Fig. 4 shows a specific embodiment. Fig. 4 shows a plan view of one example of an optical transmitter and receiver device having an optical waveguide designed for 1 : 4 branching and four light emitting devices.

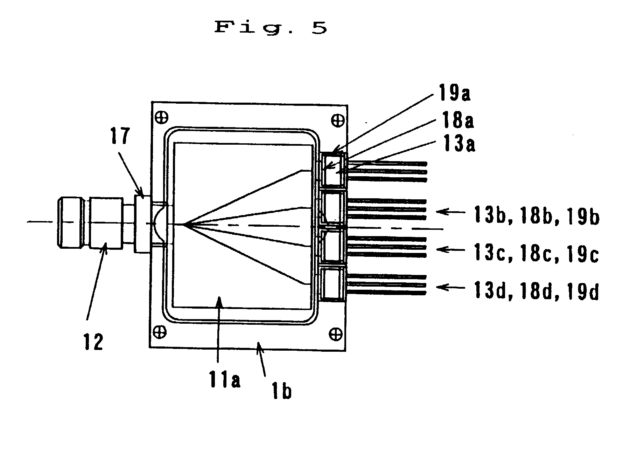

Fig. 5 shows an embodiment using a 1 x 4 branching optical waveguide and four light receiving devices.

In Fig. 4, an optical receptacle (12) having a polymer waveguide (11a) fixed thereto is fixed to a left wall of a box (1a). Lenses (15a, 15b, 15c, 15d) and four light emitting devices (14a, 14b, 14c, 14d) are integrated and fixed to supports (16a, 16b, 16c, 16d) so as to be spaced from branched waveguide ports, and each combination is fixed to a right wall of the box (1a).

Each of optical axes on the branched waveguide ports of the above optical waveguide (11a) are in parallel with one another, and four holes of the right wall of the box (1a) have a form to fit the supports (16a, 16b, 16c, 16d). The holes are spaced from each other at intervals equivalent to the intervals which the branched waveguide ports have, and the holes are provided on the plane on which the branched waveguide ports exist. The distance from the support end to the focal point in one light emitting device part is the same as that in another light emitting device part.

Other points are almost as shown in Fig. 1. The optical transmitter and receiver device shown in Fig. 4 are assembled as follows.

First, each light emitting device part is fabricated so as to has a focal point in a predetermined position as explained above, and then fixed to a predetermined position of the hole of the right wall of the box (1a). Then, in the same manner as in the example shown in Fig. 1, the box (1), the optical waveguide (11a) and the optical receptacle (12) are held on an optical stage, and in a state where an optical fiber is introduced from the optical receptacle (12) to an optical power meter, light is emitted from any one of the light emitting devices and the light emitting device and the waveguide are passably position-adjusted. Then, the optical receptacle (12) is position-adjusted relative to the optical waveguide (11a), and in a position where a maximum light intensity is obtained, these two are fixed to obtain the optical receptacle (12) to which the optical waveguide (11a) is fixed. Then, light is emitted from the light emitting devices on both ends, and in a position where a maximum intensity is obtained, the optical receptacle (12) is fixed to the box (1a) with an adhesive. A cover is finally attached with an adhesive, to obtain an optical transmitter and receiver device.

### Examples

The present invention will be explained more in detail with reference to Examples hereinafter. Examples are intended for specifically explaining the present invention and shall not limit the embodiment and the scope of the present invention in any case.
Example 1: Fabrication of optical transmitter and receiver device having optical waveguide designed for two branches for optical fiber having a core diameter of 50 µm, one light receiving device and one light emitting device.

### (Preparation of box (1))

A box (1) as shown in Figs. 1 to 3, made of stainless steel, was prepared.

The box (1) had a length (left to right in Fig. 1) of 23 mm, a width (from bottom to top in Fig. 1) of 20 mm and a thickness of 9 mm. The left wall of the box (1) had a thickness of 3.5 mm, and had a through hole for fixing an optical receptacle. The right wall of the box (1) had a thickness of 6 mm and had holes for fixing the light receiving device and the light emitting device. The box (1) had a portion capable of encasing the two-branch optical waveguide inside, and had a threaded hole in each of four corners for fixing a part. A cover (2) made of stainless steel was to be attached and fixed with these threaded holes, so that air-tightness inside was to be maintained after an optical transmitter and receiver device was assembled.

### (Preparation of optical waveguide designed for two branches (11))

An optical waveguide had the following dimensions. The optical waveguide had a film thickness of 40 µm and a length of 12 mm in the propagation direction, and one branch port existed 6 mm distant from the other, and the waveguide had a width of 40 µm in each of combined waveguide port and two branched waveguide ports.

The optical waveguide was produced by the selective photopolymerization method (JP-B-56-3522 and JP-A-03-3522) using a polycarbonate resin (trade name: Iupilon Z, supplied by Mitsubishi Gas Chemical Co., Inc.) obtained from bisphenol Z, methyl acrylate as a photo-polymerizable monomer and benzoin ethyl ether as a sensitizer.

Then, glass plates having a thickness of 1.5 mm were attached and fixed to both surfaces of the above optical waveguide film with an adhesive having a refractive index of 1.56, and the resultant set was cut to a predetermined size, following by optical polishing on both end surfaces, to give a two-branch optical waveguide.

### (Preparation of optical receptacle (12))

An optical receptacle (12) having a total length of 18.5 mm and having a box-inserting portion having an outer diameter of 5.99 mm and a length of 7 mm was prepared.

The optical receptacle (12) had an optical fiber-inserted ferrule inserted inside, and the end portion of the ferrule was in contact with the end portion of a ferrule on the optical connector. Further, the end portion of the other side was similarly in contact with the optical waveguide.

For fixing the optical receptacle (12) to the box (1) in an optimum position, as shown in Fig. 3, there was prepared a fixing ring (17) having an inner diameter of 6.01 mm, an outer diameter of 9 mm and a thickness of 2.5 mm.

### (Light receiving device (13) and light emitting device (14))

As a light receiving device (13), a photo diode of CAN type (PD: S5972, supplied by Hamamatsu Photonics K.K.) was used. As a light emitting device (14), a laser diode of CAN type designed for a wavelength of 0.78 µm (LD: RLD78PIT, rated temperature value for operation -10°C ∼ +80°C, supplied by Rohm K.K.) was used. A 2 mmφ rod lens (15) (designed for 0.78 µm, 0.25 pitch) as a collective lens and a support (16) (sheath made of stainless steel, outer diameter 6 mm, length 8.3 mm) were encased inside.

In this Example, unlike the explanation of the above optical transmitter and receiver device using an optical waveguide designed for 4 branches and four light emitting devices, the collective lens and the light emitting device were simply fit and fixed to the support with an adhesive without adjusting the position of focal point of the light emitting device part. In this Example, the focal point may be position-adjusted, and the position adjustment is rather preferred for making the subsequent axial alignment step smooth, while an optical transmitter and receiver device using one light emitting device can be prepared without adjusting the position of the focal point.

### (Assembly of optical transmitter and receiver device)

First, the support (16) having the above PD (13), LD (14) and the collective lens (15) integrated therein was fixed in the through hole portion of the box with an adhesive as shown in Fig. 1.

Then, the optical receptacle (12) was provided with the fixing ring (17) in advance, and that portion of the optical receptacle (12) which was to be connected to the optical waveguide (11) was inserted into the through hole of the box (1) from outside to face it toward the optical waveguide (11), and these were held on an optical stage.

Then, light from an LED light source with a wavelength of 0.85 µm was connected to the optical receptacle (12) with a 50/125 GI optical fiber, and the relative positions of the optical receptacle (12) and the optical waveguide (11) were adjusted with using PD (13) fixed to the box (1) as a monitor. In positions where a maximum light intensity is obtained, the above two were fixed with an adhesive.

The optical fiber from the LED light source was disconnected from the optical receptacle (12), and then the optical fiber introduced from the power meter is connected to the optical receptacle.

In the above state, LD (14) was light-emitted, and the relative positions of the optical waveguide (11) integrated with the optical receptacle (12) and LD (14) were adjusted. In positions where a maximum light intensity was obtained, the box (1) and the optical receptacle (12) were fixed to each other through the fixing ring (17) with an adhesive.

Then, the cover (2) made of stainless steel was attached to the top portion of the box, to obtain an optical transmitter and receiver device (to be referred to as "present device" hereinafter).

Further, for comparison, an optical transmitter and receiver device (to be referred to as "comparative device" hereinafter) in which a box/optical receptacle/optical waveguide/light receiving and light-emitting devices were continuously attached with an adhesive, was fabricated using the same optical waveguide, the same light receiving device and the same light emitting device as those used above in almost the same manner as above except that the light receiving device and the light emitting device were direcly fixed to the optical waveguide with an adhesive while adjusting optimum positions of the light receiving device and the light emitting device, that terminals of each device were introduced out and that the inside of the box was sealed with a resin.

### (Evaluation of optical transmitter and receiver device)

Twenty present devices and twenty comparative devices were fabricated according to the method described above. Then, terminals of LD and PD were fixed to a controlling electronic circuit board by soldering, and these optical transmitter and receiver devices were subjected to a heat cycle test consisting of 100 cycles at -10°C to +50°C (3 hours/cycle) while the parts were operated.

As a result, all the present devices exhibited excellent operation until the end of the test, while two parts of the twenty comparative devices exhibited failures during the test.

The above two comparative devices which exhibited failure were disassembled and studied to show that the failures were both caused by peeling of adhesion surfaces of the optical waveguide and the lens encasing sheath (bonding to the light emitting device).

Further, twenty present devices and twenty comparative devices fabricated in the same manner as above were maintained in an environment having a temperature of 60°C and a humidity of 90 % for 1,000 hours and then connected to controlling electronic circuit boards, and these parts were tested for operations, to show no failure.

The above results show that the optical transmitter and receiver device of the present invention can ensure sufficient reliability in a state where it is actually mounted.

### Example 2: Fabrication of optical transmitter and receiver device having optical waveguide designed for four branches for optical fiber having a core diameter of 50 µm and four light emitting devices having wavelength different from each other (dedicated for transmission).

A box (1a) of stainless steel as shown in Fig. 4 was prepared nearly in the same manner as in Example 1. It had a left to right length of 31 mm, a bottom to top width of 39 mm and a thickness of 9 mm. Four holes for fixing light emitting device parts were made in the right wall. The holes had a pitch (distance from the center of one hole to the center of adjacent hole) of 6 mm each, which was the same as the distance between one branched waveguide port to an adjacent branched waveguide port, and the end portions of the supports of the light emitting device parts were arranged on a straight line.

### (Preparation of optical waveguide (11a) designed for 4 branches)

An optical waveguide had the following dimensions. The optical waveguide had a film thickness of 40 µm and a length of 22 mm in the transmittance direction. One branched port existed 6 mm distant from the other, each optical axis was in parallel with every other optical axis, and the waveguide had a width of 40 µm in each of combined waveguide port and four branched waveguide ports. The optical waveguide was produced in the same manner as in Example 1.

An optical receptacle (12) and a fixing ring (17) therefor, which were used in Example 2, were the same as those used in Example 1.

### (Light emitting device part)

The following four LDs of CAN type were used as light emitting devices (14a, 14b, 14c, 15d).

14a: wave length 0.78 µm, RLD78PIT, rated temperature value for operation -10°C ∼ +80°C, supplied by Rohm K.K.

14b: wave length 0.85 µm, RLD78PC, rated temperature value for operation -10°C ∼ +80°C, supplied by Rohm K.K.

14c: wave length 1.31 µm, ML701B8R, rated temperature value for operation -40°C ∼ +85°C, supplied by Mitsubishi Electric Corp.

14d: wave length 1.55 µm, ML901B6R, rated temperature value for operation -40°C ∼ +85°C, supplied by Mitsubishi Electric Corp.

As collective lenses (15a, 15b, 15c, 15d), 2 mmφ rod lenses (0.25 pitch at each wavelength) were used. As supports (16a, 16b, 16c, 16d), sheaths made of stainless steel (outer diameter 5.6 mmφ, length 8.3 mm in a and b, length 8.8 mm in c and d).

In all the four light emitting device parts, the structures of the rod lenses and supports were designed such that the focal point was on the central axis of the cylindrical support and 3.5 mm before and from the top end of the support. The light emitting device parts were fine-tuned by adjusting the positions of the light emitting devices.

### (Preparation of light emitting device part)

The support (16a) to which the collective lens (15a) was incorporated and fixed was held on an optical stage, and a 50/125 GI optical fiber was held with allowing its top end to face the collective lens (15a) in a position which was on a central axis of the support (16a) and 3.5 mm before the top end of the support. Then, in a state where the other end of the optical fiber was introduced to an optical power meter, LD (14a) was fit in the support (16a), and while LD (14a) was light-emitted, LD (14a) was position-adjusted in the support (14a). In a position where a maximum optical power was obtained, LD (14a) was fixed in the support (16a). The other three kinds of light emitting device parts were also fabricated in the same manner as above.

### (Assembly of optical transmitter and receiver device)

Mounting of light emitting device part:

The above-fabricated four light emitting device parts were fixed in predetermined positions in the holes of the box (1a).

Position-adjustment of optical waveguide and optical receptacle:

Like Example 1, then, the optical receptacle (12) was provided with the fixing ring (17) in advance, and that portion of the optical receptacle (12) which was to be connected to the optical waveguide (11a) was inserted into the through hole of the box (1a) from outside to face it toward the optical waveguide (11a) disposed inside the box, and these were held on an optical stage. A 50/125GI optical fiber was connected to the optical receptacle (12), and the other end of the optical fiber was introduced to an optical power meter.

Then, in a state where LD (14b, other LD may be used) was light-emitted, the optical waveguide (11a) and the optical receptacle (12) were passably position-adjusted such that light from LD (14b) was introduced into the optical waveguide and detected with the optical power meter through the optical receptacle (12). Then, while the box (1a) and the optical waveguide (11a) were fixed, the position of the optical receptacle (12) was finely adjusted, and in a position where a maximum light intensity was obtained, the optical waveguide (11a) and the optical receptacle (12) were fixed with an adhesive.

Combination of optical waveguide and light emitting device part:

Then, LDs (14a, 14d) on both sides were light-emitted, the optical waveguide (11a) integrated with the optical receptacle (12) was position-adjusted, and in a position where a maximum intensity of light from the two LDs (14a, 14d) was obtained, the optical receptacle (12) was fixed to the box (1a) through the fixing ring (17) with an adhesive.

For confirming whether the remaining LDs (14b, 14c), which had not been used for position adjustment, had proper positional relationships or not in the optical transmitter and receiver device obtained above, LDs (14b, 14c) were light-emitted and measured for a light intensity with an optical power meter to show sufficient light intensity each.

### Example 3: Fabrication of optical transmitter and receiver device having a 1 x 4 branching optical waveguide and four light receiving devices (for receiving light from the device in Example 2)

A box (1b) made of stainless steel, which is outlined in Fig. 5 and had the same outer form as that of the box in Example 2, was prepared. Four holes for fixing light receiving device parts were made in the right wall. The holes had a pitch (distance from the center of one hole to the center of adjacent hole) of 6 mm each, which was the same as the distance between one branched waveguide port to an adjacent branched waveguide port, and the end portions of the supports of the light receiving device parts were arranged on a straight line.

The optical waveguide designed for 4 branches, which was used in this Example, was the same as the optical waveguide (11a) used in Example 2. Further, An optical receptacle (12) and a fixing ring (17) therefor, which were used in Example 3, were the same as those used in Example 1.

### (Light receiving device part)

Light receiving devices (13a, 13b, 13c, 13d) were prepared by attaching band pass filters corresponding to wavelengths (18a; 0.78 µm, 18b: 0.85 µm, 18c: 1.31 µm, 18d: 1.55 µm) to sensing areas of two kinds of PDs of CAN type.

13a, 13b: S5972, rated temperature value for operation -40°C ∼ +100°C, supplied by Hamamatsu Photonics

13c, 13d: G3476-05, rated temperature value for operation -40°C ∼ +85°C, supplied by Hamamatsu Photonics

As supports (19a, 19b, 19c, 19d) to fit PDs, sheaths made of stainless steel having an outer diameter of 5.6 φ and a length of 3.5 mm were used. The light receiving device parts were designed such that the sensing area of each PD was in a position which was on a central axis of the support, 1.8 mm inside from the top end of the support.

### (Preparation of light receiving device part)

PD (13a) having the band pass filter (18a) attached thereto with an adhesive was placed in a predetermined position in the support (19a) and fixed with an adhesive to obtain a light receiving device part. The other three kinds of light receiving device parts were also prepared in the same manner as above. (Assembly of optical transmitter and receiver device)

Mounting of light receiving device part:

The above-prepared four light receiving device parts were fixed to predetermined positions in the holes of the wall of the box (1b).

Position adjustment of optical waveguide and optical receptacle:

Like Example 1, then, the optical receptacle (12) was provided with the fixing ring (17) in advance, and that portion of the optical receptacle (12) which was to be connected to the optical waveguide (11a) was inserted into the through hole of the box (1a) from outside to face it toward the optical waveguide (11a) disposed inside the box, and these were held on an optical stage.

Then, light from an LED light source with a wavelength of 0.85 µm was connected to the optical receptacle (12) with a 50/125GI optical fiber. With using PD (13b) fixed to the box (1b) as a monitor (other PD may be used), the relative positions of the optical receptacle (12) and the optical waveguide (11a) were adjusted, and in position where a maximum light intensity was obtained, the above two were fixed with an adhesive.

Positioning of optical waveguide and light receiving device part:

Then, the optical waveguide (11a) integrated with the optical receptacle (12) was position-adjusted with using two PDs (13a, 13c) on both sides as monitors, and in an optimum position where the two PDs (13a, 13d) exhibited a sufficient light intensity, the optical receptacle (12) was fixed to the box (1b) with an adhesive through the fixing ring (17).

For confirming whether the remaining PDs (13b, 13c), which had not been used for position adjustment, had proper positional relationships or not in the optical transmitter and receiver device obtained above, PDs (13b, 13c) were used as monitors for measuring light intensities to show to show sufficient light intensity each.

Example 3 used light receiving device parts which were integrated with supports, while PDs themselves may be fixed to the box.

In Examples 2 and 3, further, the supports for holding LDs or PDs are made so as to have a uniform outer shape, and the holes of the box wall for fixing these parts are made so as to have a uniform shape, whereby boxes of one kind can be commonly used for optical transmitter and receiver devices having different constitutions, and the production cost can be decreased.

As is clear in the above Examples and Detailed Description of the present invention, the optical transmitter and receiver device of the present invention can ensure sufficient reliability in a practically mounted state. Further, it can be applied to various constitutions of light receiving devices and light emitting devices, the number of constituents thereof is small, the assembling thereof is easy, and it is suitable for practical use.

## Claims

1. An optical transmitter and receiver device fabricated by joining and fixing an optical input/output part to a combined waveguide port of an optical waveguide designed for 1 : N branching (N = an integer of at least 2) and providing each of branched waveguide ports of the optical waveguide with a light emitting device part or a light receiving device part,
wherein the optical waveguide is fixed in a box, that wall of the box which is located on the branched waveguide end side is provided with holes to fit the light emitting device part or the light receiving device part, and the light emitting device part or the light receiving device part is fixed in the hole and spaced from the branched waveguide ports.

2. A device according to claim 1, wherein the optical waveguide is a polymer optical waveguide produced by a solvent casting method.

3. A device according to claim 1 or 2, wherein the optical input/output part is an optical receptacle and the optical receptacle is fixed to the box.

4. A device according to claim 1 or 2, wherein the optical input/output part is an optical fiber whose end portion connected to the optical waveguide is reinforced with a reinforcement material, and the reinforcement material is fixed to the box.

5. A device according to claim 1, 2, 3 or 4, wherein the light emitting device part is a part obtained by integrating a light emitting device and a collective lens present before the light emitting device (on the optical waveguide side) with a support.

6. A device according to claim 5, wherein the light emitting device part has a focal point at a predetermined position before the light emitting device part (on the optical waveguide side).

7. A device according to any one of the preceding claims, wherein the light receiving device part is a light receiving device itself.

8. A device according to any one of claims 1 to 6, wherein the light receiving device part is a part obtained by integrating a light receiving device having a sensing area in a predetermined position with a support.

9. A device according to any one of the preceding claims, wherein the branched waveguide ports have optical axes which are parallel with each other, the holes are arranged on a straight line at intervals equivalent to those of the branched waveguide ports, and the holes are provided on a plane on which the branched waveguide ports exist.

10. A device according to any one of the preceding claims, wherein axial alignment is attained by adjusting the position of the optical waveguide to be fixed.

11. A device according to any one of the preceding claims, wherein the holes for fixing the light emitting device part and the light receiving device part have a uniform shape.
